# EUROPEAN PATENT SPECIFICATION

(11) **EP 3 713 456 B1**
(45) Date of publication and mention of the grant of the patent: **07.09.2022**
(21) Application number: 18707968.6
(22) Date of filing: 05.01.2018
(51) Int. Cl.: A47J 31/057, A47J 31/00, A47J 31/02, B65D 85/816

(54) **BEVERAGE BREWING APPARATUS AND METHOD**
GETRÄNKEBRAUVORRICHTUNG UND VERFAHREN
APPAREIL ET PROCÉDÉ D'INFUSION DE BOISSON

(30) Priority: 22.11.2017 LT 2017537
(43) Date of publication of application: 30.09.2020
(73) Proprietor: UAB "ESPRESA", 03209 Vilnius (LT)
(72) Inventor: RUDIK, Ernest, LT-01134 Vilnius (LT)
(74) Representative: Zaboliene, Reda
(86) International application number: PCT/IB2018/050075
(87) International publication number: WO 2019/102271

(56) References cited:
- WO-A1-02/13666
- US-A- 3 696 733
- US-A- 4 825 759
- US-A- 5 868 062
- US-A1- 2005 211 102

## Description

### FIELD OF THE INVENTION

The invention relates to the preparation of food products, and in particular the preparation apparatus of food for which hot water is required, consisting of a cup and a water preparation device; and a food preparation method using the said preparation apparatus.

### DESCRIPTION OF THE RELATED ART

This description provides a technical solution for preparing food, and in particular for brewing beverages, coffee, when dry food substances is required to be filled with hot water for brewing. The solution consists of a water preparation device, a cup of special construction for use with the said apparatus and a method of brewing the beverage. The substances and water for brewing the beverage are placed in the cup, the device heats up the water, increases the pressure of the heated up water, and directs it to the container of substances. The apparatus is designed for use in vehicles; the brewing process is completely automatic, without user engagement.

The patent document US2005211102 (A1) (published on September 29, 2005) provides a coffee or other hot beverage brewing system where at the initial step of brewing all the substances (including water) necessary for brewing the beverage are placed in a beverage container of special construction. Water in the cup is heated up in a coffee vending machine using a microwave-operated heater. Some people do not use products that are heated by microwave ovens, thus this type of coffee brewing can lower the amount of coffee they buy; on the other hand, coffee lovers are very sensitive to the taste of coffee, and processing of all substances of beverages using microwaves can adversely affect the taste of the beverage. Another deficiency of the quoted document is the extremely complex construction of the cup, the method of brewing comprising many steps and, moreover, these steps must be performed by a human. The high number of steps of brewing requires deepening, concentration in brewing the beverage - this can also lead to a smaller amount of buyers of the beverage. From the construction of the cup it can be understood that even a little damage to the construction when preparing the cup for heating or when heating the cup can lead to an unexpected outflow of the liquid, and other significant deviations from the brewing process that may result in the beverage brewing process being interrupted without having brewed the beverage. There is also no possibility to accurately select and set the temperature of the liquid that infuses coffee powder, which changes the taste of the beverage.

The patent document US20060272510 (A1) (published on 7/12/2006) provides a cup of coffee (or other beverage) with a lid, whose construction allows the dry substances for brewing the beverage to be placed in the lid, which are disposed of with the lid after brewing the beverage. Compared to the solution provided in this description, the solution provided in the cited document differs in the construction of the cup. The solution provided in the cited document is not suitable for any coffee brewing machines, the beverage needs to be made by yourself, water is not provided with the cup, it is not described the way water is heated up for the beverage, when the lid with substances of the beverage is disposed of, the cup is left without the lid, the possibility to spill the beverage arises, i.e. compared with a covered cup, it is not so convenient and safe to drink the beverage. Also, the cup is not intended for automatic beverage brewing.

The patent document US3696733 (published on 10 October, 1972) describes a single cycle coffee maker. However, the apparatus is not automatic, and the outcome for the product depends very much on the person making the coffee. In addition, the apparatus does not have an ability to create and withstand the elevated pressure of the liquid.

The patent document US5868062 (published on Ferbuary 9, 1999) presents a coffee liquid extracting apparatus with the water heating component, circulation pump for transport the liquid and all needen vessels and containers for the water and the dry substances.,The apparatus has an ability to increase the water temperature and to control the fixed time with the circulating water. However, the apparatus does not have an ability to withstand the elevated pressure of the liquid, which is important in order to prepare a drink with a desired taste and flavour. In addition, the apparatus does not have the energy storage means.

To sum up, the listed solutions of the related art have the following deficiencies:
- the cup is not intended for automatic beverage brewing;
- the complicated construction of the cup, even with a small change in the construction, its damage may lead to a breakdown of the brewing method without brewing the beverage;
- the beverage brewing has many steps which have to be performed by a human;
- there is no possibility to accurately select the temperature of the beverage;
- no water is provided with the cup;
- the result (flavor of the beverage brewing depends on skills of a brewer, the quality of water.

This description provides a new technical solution that does not have the above mentioned deficiencies.

### SUMMARY OF THE INVENTION

This description provides a new apparatus and a method to prepare food that need to be filled with hot water, such as tea, soup, broth, and especially coffee (hereinafter - "the beverage"). The new apparatus includes a water preparation device and a cup of special construction. The construction of the cup is suitable for placing water and dry substances, preparations for brewing beverages. The device pumps water from the cup, heats up it to the required temperature, combined with a container of dry substances of the beverage, the pressure of water is increased to at least 3.5 bar., water penetrates through dry food substances, acquires the properties of the beverage, enters the cup.

The present invention provides the beverage brewing apparatus and method for use in vehicles, the construction of the cup allows the cup to be inserted into and/or removed from the device from the four sides of the device, the device is operated by 12V DC, has power storage means to reduce the peak load of the power supply circuit, the water supplied with the cup may be specially processed, prepared to convey the particular flavor of food.

### BRIEF DESCRIPTION OF THE DRAWINGS

Figure 1 shows a schematic view of the cup of the present invention.
Figure 2 shows a view of the device of the present invention

The presented figures are more illustrative, scale, proportions and other aspects do not necessarily correspond to the actual technical solution.

### THE PREFFERED EMBODIMENTS

This description provides a solution to prepare food that need to be filled with hot water. The said food may be coffee, tea, soup, broth, porridge or other product (hereinafter - "the beverage"). The solution is applicable to vehicles such as cars, buses, airplanes, ships, trains, etc., but can also be easily adapted to a different environment where the supply of power to a beverage brewing apparatus is possible.

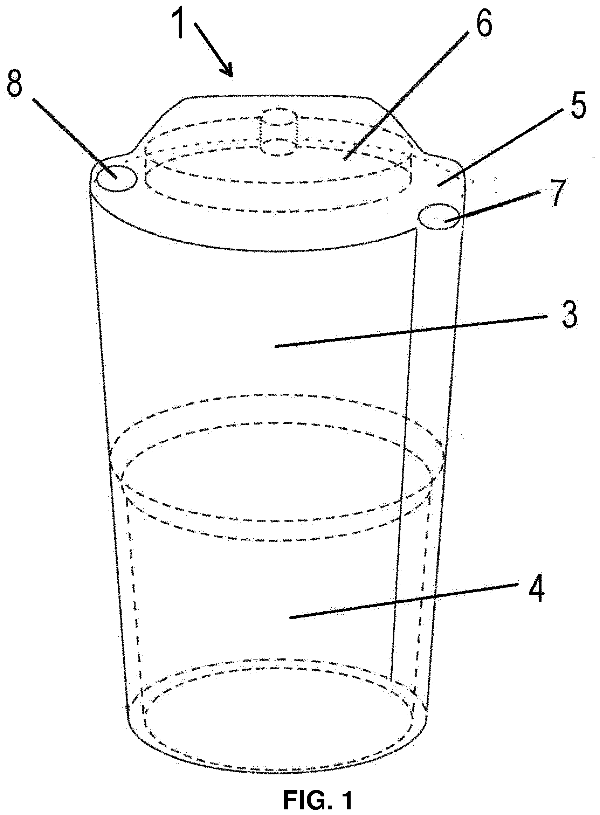

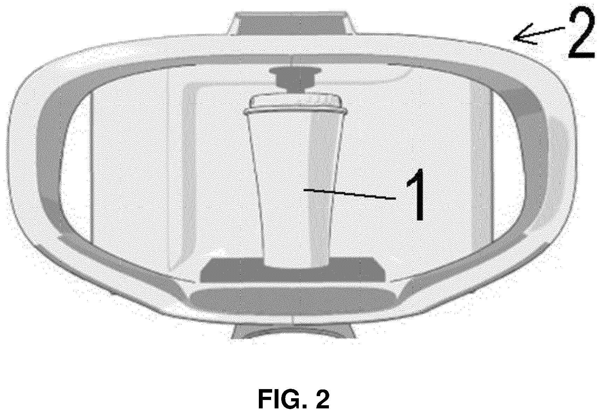

The said solution consists of a hot water preparation device (2) (Fig. 2) (hereinafter - "the device"), a cup (1) (Fig. 1) of special construction and a method of beverage brewing. The construction and functions of the cup (1) and the device (2) are intended to use both elements (the cup (1) and device (2)) together; separately used elements do not produce the required technical effect.

This description provides the **cup (1)** containing at least the following components:
- an outer vessel (3) which combines other components of the construction of the cup (1), contains the brewed beverage inside,
- a cold water tank (4);
- a lid of the outer vessel (5);
- a container of dry food substances (6).

The **outer vessel (3)** of the cup resembles the usual disposable cup of coffee, i.e. a slightly narrowing hollow cylinder. In other embodiments, the shape of the outer vessel (3) may be different. The outer vessel (3) is made of a material resistant to hot water, which may come into contact with foodstuffs - cardboard, plastic or other similar material may be used for this purpose. The outer vessel (3) combines all the elements of the cup (1) into the whole: a cold water tank (4), a lid (5), contains the brewed beverage inside.

The **cold water tank (4)** is placed in the inner lower part of the outer vessel (3) and occupies a part of the outer vessel (3). The form of the water tank (4) resembles the shape of the outer vessel (3), in particular the lower part of the outer vessel (3). The water tank (4) is tightly separated from the upper part of the outer vessel (3). The water tank (4) can be realized as a separate tank, placed inside the outer vessel (3), in the lower part. It is also possible to realize the cold water tank (4) using the outer vessel (3), by separating the part of the outer vessel (3) tightly for the liquid. A combination of both aspects of the construction is possible: the inner part of the outer vessel (3) is tightly separated, i.e. the inner part of the outer vessel (3) is divided into two interconnected parts, and in the lower part the cold water tank (4) is placed. A requirement for the material of water tanks (4) is liquid tightness, suitability for use in contact with food.

A **pipe (7)** through which water can flow from the tank (4) is connected to the cold water tank (4). In the case of the present invention, the pipe (7) is tightly attached to the water tank (4); in other case, it can be made of a material integral with the tank (4), water can flow through the pipe (7) from the tank (4). The said pipe (7) extends beyond the wall of the outer vessel (3) or through the lid (5) at its other end than that which is attached to the water tank (4). Prior to the start of brewing the beverage, the said pipe (7) must be tightly closed, the water in the tank (4) cannot penetrate, pass through the pipe (7). When the cup (1) is inserted into the device (2), before water begins to flow from the tank (4) to the device (2), the closure must be removed. In one embodiment, the said closure of the pipe (7) may be a valve that prevents the flow of water through the pipe (7), and when the device (2) is connected, the valve opens, the water can flow through the pipe (7).

The **lid (5)** is attached on the upper side of the outer vessel (3). The lid (5) is attached indistinguishably from the outer vessel (3), it can be made of a material integral with the outer vessel (3). Alternatively, the lid (5) can be easily separated from the outer vessel (3). In one embodiment, the pipe (7) through which the water flow from the tank (4) to the device (2), can protrude through one of its ends through the lid (5). The lid (5) has a hole (8) for drinking. The lid (5) is made of high-strength plastic that can come into contact with food, which does not change its properties in contact with high temperature water.

The lid (5) has the **container of food substances (6)** that contains dry food substances from which the beverage is made. The lower wall of this container of food substances (6) consists of a filter through which the liquid can penetrate, but which holds dry food substances inside the container (6). The container of food substances (6) has a hole through which water from the device (2) enters the container of food substances (6). The hole may have a valve or other hole closure which passes the liquid into the inside of the container of food substances (6), but food substances are held inside the container (6). The hole has technical means, couplings, with which the pipe (2) is tightly connected to the container of food substances (6), this connection is designed in such a way that water can flow through the connection without penetrating to the outside at a pressure of at least 3.5 bar. The inner shape of the container of food substances (6) resembles the shape of a small cylinder, tablet. The said container of food substances (6) is realized in the lid (5), in addition to the said openings for holding hot water and the contents of the filter in the container (6), all the other walls of the container (6) and their connections are sealed, waterproof. The container (6) must be able to withstand a pressure of at least 3.5 bar. The container of food substances (6) is made of high-strength plastic that helps the container (6) to keep the shape and integrity at an inner pressure of at least 3.5 bar. The filter of food substances for holding food substances is adapted to create the said pressure of the liquid.

In another embodiment, the cup (1) may be without the separate cold water tank (4). In this case, the inner part of the outer vessel (3) is integral, without separation, where water is placed before brewing the beverage. This inner part of the outer vessel (3), like the cold water tank (4), has the pipe (7) through which the device (2) can pump the water for heating.

Another component of this solution for brewing the beverage is the **hot water preparation device (2).** The device (2) pumps water from the cold water tank (4), heats up it to a temperature of at least 95 degrees of Celsius or other temperature necessary for brewing the beverage, and with the pressure (in the case of the present invention to at least 3.5 bar), releases water into the container of food substances (4) of the cup (1).

The hot water preparation device (2) has at least the following main parts:
- a housing,
- a moving connection with the cup (1),
- a power circuit with power storage means,
- a liquid heating component,
- a liquid pump to increase the pressure of water.

In addition to the above components that perform the basic functions of the beverage brewing in the case of the present invention, there may be other elements, components that ensure the proper operation of the device (2) according to the instructions.

**The housing of the device (2)** combines, contains all the components of the device (2). In the case of the present invention, the shape and functions of the device (2) are realized so that the cup (1) can be placed into the device (2) and taken from the device (2) from at least four sides of the device (2). This construction provides a convenient way to use the device (2), especially if it is located in the middle of the vehicle, for example in the middle of the car, between the front seats.

The **moving connection with the cup** is designed to connect the device (2) with the cup (1), to transfer the liquid between the device (2) and the cup (1). When the cup (1) is located at the place of the device (2) where the beverage brewing can be started, the moving part of the device (2) descends to the lid (5) of the cup (1), and pipes and hoses in the moving connection are tightly connected to the pipe in the lid (5) of the cup (1) from the cold water tank (4) and to the pipe for feeding hot water to the container of food substances (6). The connection of the moving connection and in particular the connection of its pipe for transferring water to the container of food substances (6), with the connection of the container of food substances (6) of the cup (1) must allow to transfer water from the device (2) to the cup (1) at a pressure of at least 3,5 bar.

The **power circuit** of the device (2) **with power storage means** ensures the proper power supply from the power circuit of the vehicle to all electrical components of the device (2). When the power supply to the device (2) is provided from the power system of the vehicle, where cannot be long-lasting high-power load, the device (2) has power storage means. Power storage means accumulate power from the device (2) of the vehicle during non-use and deliver power to the device (2) when the device (2) brews the beverage. In this way, the power system of the vehicle is protected from high power consumption fluctuations. In the case of this invention, the power circuit of the device (2) is adapted to operate by connecting the 12V DC power supply.

The **liquid heating component** of the device (2) consists of liquid transfer means, through which water is fed from the cup (1) to the water tank of the heating component, and from it into the container of food substances (6) of the cup (1). The water tank of the heating component contains all the water which went out of the tank (4) of the cup, it is heated up in the container to the required temperature for brewing the beverage and transferred to the liquid pump. In one embodiment, the heating component is realized with the ability to set the required temperature of the heated liquid.

The **liquid pump** increases the water pressure and directs the water towards the container of food substances (6) in the cup (1). In order to prepare certain types of coffee beverages, to give the needed flavor to the coffee, it is needed to increase the pressure of water. In the case of this invention, the liquid pump increases the pressure of the liquid to 3.5 bar.

The **method of brewing the beverage** using the described apparatus, the water preparation device (2) and the cup (1) comprises following steps:
- the cup (1) for brewing the beverage is placed in the water preparation device (2),
- the water preparation device (2) is connected to the cup (1) by pipes, hoses and connecting elements: one of pipes of the device (2) is connected to the pipe of the cup (1), through which the water flows from the cold water tank (4) to the device (2); the other pipe (2) of the device (2) is connected to a hole through which the water prepared in the device (2) flows into the container of food substances(6),
- the water which entered the device (2) from the cup (1) is heated to the required temperature for brewing the specific beverage (in the case of this invention, at least 95 degrees of Celsius);
- when it is heated to a set temperature, the pressure of water is increased and the water is supplied to the container pf food substances (6) of the cup, in which the water acquires the properties of the beverage, penetrates through the filter of the container of food substances (6) and enters the inner part of the outer container (3) of the cup (1);
- when the entire water in the cold water tank is heated up in the device (2) and when the entire water passes through the container of food substances (6), it enters the inner part of the outer container (3) of the cup (1), the beverage is brewed, the cup (1) is disconnected from the device (2), the cup (1) can be removed from the device (2).

## Claims

1. A beverage brewing apparatus comprising a cup (1) and a water preparation device (2) where the cup (1) has at least
- an outer vessel (3),
- a cold water tank (4) in which water is placed for brewing the beverage;
- a lid (5) of the outer vessel that covers the outer vessel (3), contains substances for brewing the beverage,
- a container of food substances (6),
and the water preparation device (2) has at least
- a housing,
- a moving connection with the cup for transferring the water between the cup (1) and the device (2),
- a power circuit with power storage means to power electrical receivers of the device,
- a liquid heating component to warm water to the temperature suitable for brewing,
- a liquid pump for increasing the pressure of water and directing it to a container of food substances (6),
**characterized in that**
- the connection between the water preparation device (2) and the cup (1) is designed in such a way that the water can flow through the connection without penetrating to the outside at a pressure of at least 3.5 bar;
- the container of food substances (6) in the cup (1) is made of high-strength plastic that can withstand its shape and integrity when an inner pressure is at least 3.5 bar;
- a direct current with voltage of 12 V is required to power the device (2);
- the power circuit of the device (2) comprises power storage means that accumulate the power during non-use of the device (2) and delivers power when the device (2) brews the beverage, thus reducing the peak power loads in the power supply system of the vehicle.

2. The beverage brewing apparatus comprising the cup (1) and the water preparation device (2) according to claim 1, **characterized in that** the housing of the water preparation device (2) is such that the cup (1) can be placed into the device (2) and taken from the device (2) from at least four sides of the device (2).

3. The beverage brewing apparatus comprising the cup (1) and the water preparation device (2) according to claims 1-2, **characterized in that** the upper wall of the cup (1) of the container of food substances (6) contains a filter through which the liquid can penetrate, but which holds dry substances in their container (6).

4. The beverage brewing apparatus comprising the cup (1) and the water preparation device (2) according to claims 1-3, **characterized in that** the heating component of the device (2) is realized with the ability to set the required temperature of the heating liquid using a direct current with voltage of 12 V or from power storage means of the device (2).

5. A method of brewing the beverage is implemented by using the apparatus according to claims 1 to 4, **characterized in that** it comprises the following steps of brewing:
- the cup (1) for brewing the beverage is placed in the water preparation device (2),
- the water preparation device (2) is connected to the cup (1) by pipes, hoses and connecting elements: one of pipes of the device (2) is connected to the pipe of the cup (1), through which the water flows from the cold water tank (4) to the device (2); the other pipe (2) of the device (2) is connected to a hole through which the water prepared in the device (2) flows into the container of food substances (6),
- the power is used as a direct current with voltage of 12 V or from power storage means of the device (2),
- the water which entered the device (2) from the cup (1) is heated to the required temperature for brewing the specific beverage (in the case of this invention, at least 95 degrees of Celsius);
- when it is heated to a set temperature, the pressure of water is increased and the water is supplied to the container of food substances (6) of the cup, in which the water acquires the properties of the beverage, penetrates through the filter of the container of food substances (6) and enters the inner part of the outer container (3) of the cup (1);
- when the entire water in the cold water tank is heated up in the device (2) and when the entire water passes through the container of food substances (6), it enters the inner part of the outer container (3) of the cup (1), the beverage is brewed, the cup (1) is disconnected from the device (2), the cup (1) can be removed from the device (2).

## Patentansprüche

1. Getränkebrühgerät mit einer Tasse (1) und einer Wasserzubereitung Vorrichtung (2), wo der Becher (1) mindestens aufweist
- ein äußeres Gefäß (3),
- ein Kaltwassertank (4), der ins Wasser zum Aufbrühen des Getränks gegeben wird;
- ein Deckel (5) des Außengefäßes, der das Außengefäß (3) abdeckt, Substanzen zum Aufbrühen des Getränks enthält,
- ein Lebensmittelbehälter (6),
und die Wasseraufbereitungseinrichtung (2) mindestens aufweist
- ein Gehäuse,
- eine bewegliche Verbindung mit dem Becher zum Übertragen des Wassers zwischen dem Becher (1) und der Vorrichtung (2),
- ein Stromkreis mit Stromspeichermitteln zur Stromversorgung von elektrischen Empfängern des Geräts,
- eine flüssige Heizkomponente, um Wasser auf die geeignete Temperatur zu erwärmen brauen,
- eine Flüssigkeitspumpe, um den Wasserdruck zu erhöhen und es zu einem Behälter mit Lebensmittelsubstanzen (6) zu leiten,
**dadurch gekennzeichnet**
- die Verbindung zwischen der Wasseraufbereitungseinrichtung (2) und dem Becher (1) so ausgelegt ist, dass das Wasser mit einem Druck von mindestens 3,5 bar durch die Verbindung fließen kann, ohne nach außen zu dringen;
- der Lebensmittelbehälter (6) im Becher (1) besteht aus hochfestem Kunststoff, der seiner Form und Unversehrtheit bei einem Innendruck von mindestens 3,5 bar standhält;
- ein Gleichstrom mit einer Spannung von 12 V, der zur Stromversorgung des Geräts erforderlich ist (2);
- der Stromkreis des Geräts (2) Stromspeichermittel umfasst, die den Strom während des Nichtgebrauchs des Geräts (2) akkumulieren und Strom liefern, wenn das Gerät (2) das Getränk brüht, wodurch die Spitzenstromlasten im Strom beim Versorgungssystem des Fahrzeugs reduziert werden.

2. Getränkebrühgerät umfassend die Tasse (1) und die Wasserzubereitungsvorrichtung (2) nach Anspruch 1, **dadurch gekennzeichnet, dass** das Gehäuse der Wasseraufbereitungsvorrichtung (2) so beschaffen ist, dass der Becher (1) von mindestens vier Seiten der Vorrichtung (2) in die Vorrichtung (2) einlegbar und aus der Vorrichtung (2) zum Ermitteln ist.

3. Getränkebrühgerät mit der Tasse (1) und der Wasserzubereitungsvorrichtung (2) nach den Ansprüchen 1-2, **dadurch gekennzeichnet, dass** die obere Wand der Tasse (1) den Lebensmittelbehälter (6) enthält Filter, durch die die Flüssigkeit dringen kann, die aber trockene Stoffe in ihrem Behälter (6) halten.

4. Getränkebrühgerät, umfassend die Tasse (1) und die Wasserzubereitungsvorrichtung (2) nach den Ansprüchen 1-3, **dadurch gekennzeichnet, dass** die Heizkomponente der Vorrichtung (2) mit der Möglichkeit realisiert ist, die erforderliche Temperatur einzustellen, die geheizte Flüssigkeit mittels Gleichstrom mit einer Spannung von 12 V oder aus Energiespeichermitteln des Gerätes (2) warm zu halten.

5. Ein Verfahren zum Aufbrühen des Getränks wird unter Verwendung der Vorrichtung nach den Ansprüchen 1 bis 4 implementiert, **dadurch gekennzeichnet, dass** es die folgenden Aufbrühen Schritte umfasst:
- die Tasse (1) zum Aufbrühen des Getränks wird in die Wasserzubereitungsvorrichtung gestellt (2),
- das Wasseraufbereitungsgerät (2) ist mit dem Becher (1) durch Rohre und Schläuche verbunden.
Verbindungselemente: eines der Rohre des Geräts (2) ist mit dem Rohr des Bechers (1) verbunden, durch das das Wasser aus dem Kaltwassertank (4) zum Gerät (2) fließt; das andere Rohr (2) der Vorrichtung (2) ist mit einem Loch verbunden, durch das das in der Vorrichtung (2) zubereitete Wasser in den Lebensmittelbehälter (6) fließt,
- die Energie wird als Gleichstrom mit einer Spannung von 12 V oder aus Energiespeichermitteln des Geräts (2) verwendet,
- das aus der Tasse (1) in die Vorrichtung (2) eingetretenes Wasser wird auf die zum Aufbrühen des jeweiligen Getränks erforderliche Temperatur (im Fall dieser Erfindung mindestens 95 Grad Celsius) erhitzt;
- wenn es auf eine eingestellte Temperatur erhitzt wird, wird der Wasserdruck erhöht und das Wasser wird dem Lebensmittelbehälter (6) der Tasse zugeführt, in dem das Wasser die Eigenschaften des Getränks annimmt, durch den Filter dringt in den Lebensmittelbehälter (6) und tritt in den inneren Teil des äußeren Behälters (3) des Bechers (1) ein;
- Wenn das gesamte Wasser im Kaltwasserbehälter in der Vorrichtung (2) erhitzt wird und das gesamte Wasser durch den Lebensmittelbehälter (6) fließt, tritt es in den inneren Teil des äußeren Behälters (3) der Tasse ein (1), das Getränk wird gebrüht, die Tasse (1) wird vom Gerät (2) getrennt, die Tasse (1) kann vom Gerät (2) abgenommen werden.

## Revendications

1. Appareil d'infusion de boissons comprenant une tasse (1) et un dispositif de préparation d'eau (2) où la coupelle (1) a au moins
- un récipient extérieur (3),
- un réservoir d'eau froide (4) dans lequel est placée l'eau nécessaire à la préparation de la boisson ;
- un couvercle (5) du récipient extérieur qui recouvre le récipient extérieur (3), contient les substances pour l'infusion de la boisson,
- un récipient de substances alimentaires (6),
et le dispositif de préparation d'eau (2) comporte au moins
- un boîtier,
- une connexion mobile avec la coupelle pour transférer l'eau entre la coupelle (1) et le dispositif (2),
- un circuit d'alimentation avec des moyens de stockage d'énergie pour alimenter des récepteurs électriques du dispositif,
- un composant de chauffage de liquide pour chauffer l'eau à la température appropriée pour l'infusion,
- une pompe à liquide pour augmenter la pression de l'eau et la diriger vers un récipient de substances alimentaires (6),
**caractérisé par le fait que**
- la connexion entre le dispositif de préparation d'eau (2) et la coupelle (1) est conçue de telle sorte que l'eau puisse s'écouler à travers le raccordement sans pénétrer à l'extérieur à une pression d'au moins 3,5 bars ;
- le récipient de substances alimentaires (6) dans la coupelle (1) est fait de plastique à haute résistance qui peut conserver sa forme et son intégrité lorsqu'une pression interne est d'au moins 3,5 bars ;
- un courant continu avec une tension de 12 Vis nécessaire pour alimenter l'appareil (2) ;
- le circuit d'alimentation du dispositif (2) comprend des moyens de stockage d'énergie qui accumulent l'énergie pendant la non-utilisation du dispositif (2) et fournissent de l'énergie lorsque le dispositif (2) prépare la boisson, réduisant ainsi les charges d'énergie de pointe dans le système d'alimentation électrique du véhicule.

2. L'appareil de préparation de boisson comprenant la coupelle (1) et le dispositif de préparation d'eau (2) selon la revendication 1, **caractérisée par le fait que** le boitier du dispositif de préparation d'eau (2) est tel que la coupelle (1) peut être placée dans le dispositif (2) et retirée du dispositif (2) par au moins quatre côtés du dispositif (2).

3. L'appareil de préparation de boissons comprenant la coupelle (1) et le dispositif de préparation d'eau (2) selon les revendications 1 et 2, **caractérisées par le fait que** la paroi supérieure de la coupelle (1) du récipient de substances alimentaires (6) contient un filtre à travers lequel le liquide peut pénétrer, mais qui retient les substances sèches dans leur récipient (6).

4. L'appareil de préparation de boissons comprenant la coupelle (1) et le dispositif de préparation d'eau (2) selon les revendications 1 à 3, **caractérisées par le fait que** le composant de chauffage du dispositif (2) est réalisé avec la capacité de régler la température requise du liquide de chauffage en utilisant un courant continu avec une tension de 12 V ou à partir de moyens de stockage d'énergie du dispositif (2).

5. Un procédé d'infusion de la boisson est mis en oeuvre en utilisant l'appareil selon les revendications 1 à 4, **caractérisées par le fait qu'**il comprend les étapes d'infusion suivantes :
- la coupelle (1) pour l'infusion de la boisson est placée dans le dispositif de préparation d'eau (2),
- le dispositif de préparation de l'eau (2) est relié à la coupelle (1) par des tuyaux, des flexibles et des éléments de liaison : l'un des tuyaux du dispositif (2) est relié au tuyau de la coupelle (1), par lequel l'eau s'écoule du réservoir d'eau froide (4) vers le dispositif (2) ; l'autre tuyau (2) du dispositif (2) est relié à un trou par lequel l'eau préparée dans le dispositif (2) s'écoule dans le récipient de substances alimentaires (6),
- l'énergie est utilisée comme un courant continu avec une tension de 12 V ou à partir des moyens de stockage d'énergie du dispositif (2),
- l'eau qui a pénétré dans le dispositif (2) à partir de la coupelle (1) est chauffée à la température requise pour préparer la boisson spécifique (dans le cas de cette invention, au moins 95 degrés Celsius) ;
- lorsqu'elle est chauffée à une température déterminée, la pression de l'eau est augmentée et l'eau rempli le récipient de substances alimentaires (6) de la coupelle, dans laquelle l'eau acquiert les propriétés de la boisson, pénètre à travers le filtre du récipient de substances alimentaires (6) et entre dans la partie intérieure du récipient extérieur (3) de la coupelle (1) ;
- lorsque la totalité de l'eau du réservoir d'eau froide est réchauffée dans le dispositif (2) et lorsque la totalité de l'eau traverse le récipient de substances alimentaires (6), elle pénètre dans la partie intérieure du récipient extérieur (3) de la coupelle (1), la boisson est infusée, la coupelle (1) est déconnectée du dispositif (2), la coupelle (1) peut être retirée du dispositif (2).
